# EUROPEAN PATENT SPECIFICATION

(11) **EP 1 614 869 B1**
(45) Date of publication and mention of the grant of the patent: **04.04.2007**
(21) Application number: 05014635.6
(22) Date of filing: 06.07.2005
(51) Int. Cl.: F01M 11/08, B60K 15/00, F01P 11/08, B01D 19/00, F01P 11/06, F01P 7/14

(54) **Flange structure**
Flanschstruktur
Structure de rebord

(30) Priority: 08.07.2004 JP 2004201621
(43) Date of publication of application: 11.01.2006
(73) Proprietor: AICHI MACHINE INDUSTRY CO., LTD., Nagoya-shi, Aichi-ken (JP); Sanoh Kogyo Kabushiki Kaisha, Koga-shi, Ibaraki-ken 306-0023 (JP)
(72) Inventor: Hada, Masatoshi Aichi Machine Industry Co., Ltd., Nagoya-shi, Aichi-ken (JP); Tamai, Akiyoshi c/o Sanoh Kogyo K. K., Ibaraki-ken (JP)
(74) Representative: HOFFMANN EITLE

(56) References cited:
- US-A- 5 103 878
- US-A- 5 579 727
- US-A- 5 829 619
- US-A- 6 138 852

## Description

### BACKGROUND OF THE INVENTION

### Field of the Invention

The present invention relates to a flange structure for use in engine cooling systems and lubricating systems of automobiles and industrial machines.

### Description of Related Art

In some cooling system or some lubricating system for an engine, a flange generally called a connector flange is attached to the body, provided with a fluid passage, of a fluid device.

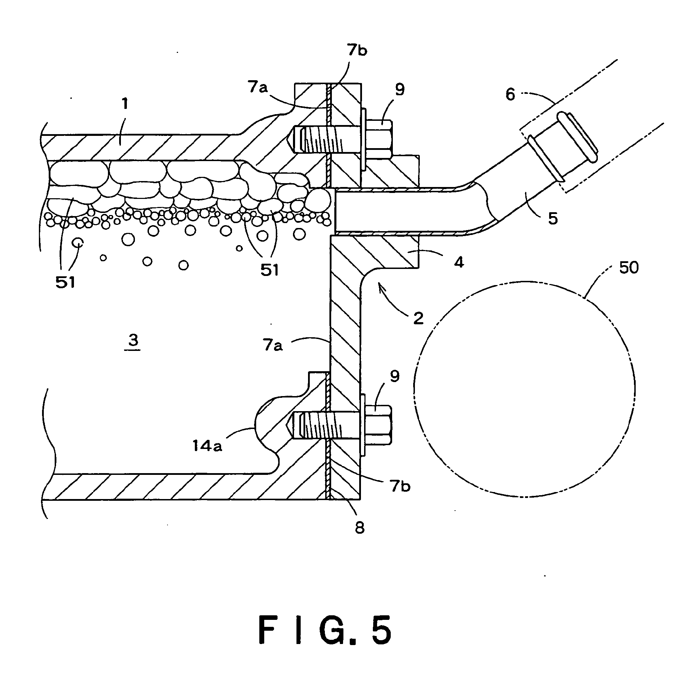

Referring to Fig. 5, a conventional connector flange 2 is attached to a structure 1 internally provided with a fluid passage 3. The connector flange 2 is integrally provided with a boss 4. The connector flange 2 is formed by casting or forging. A connecting tube 5 is fixedly connected to the boss 4 by press fitting. A tube 6 is connected to the connecting tube 5. The connector flange 2 has a joining surface 7a joined to a joining surface 7b of the structure 1. A gasket 8 is held between the joining surface 7b of the structure 1 and the joining surface 7a of the connector flange 2, and the connector flange 2 is fastened to the structure 1 with bolts 9. The joining surfaces 7a and 7b need to be finished by machining so that the joining surfaces 7a and 7b may be in close contact with the gasket 8. Generally, a hole for receiving the connecting tube 5 therein of the boss 4 is formed with its axis extended perpendicularly to the joining surfaces 7a and 7b to facilitate machining work for forming the hole.

Various devices are arranged near the connector flange 2 in the cooling system or the lubricating system for the automotive engine in most cases. Usually, the boss 4 is formed in an upper part of the connector flange 2 and the connecting tube 5 is disposed at an elevated level to avoid interference between the connecting tube 5 and a device 50 when the structure 1 is installed.

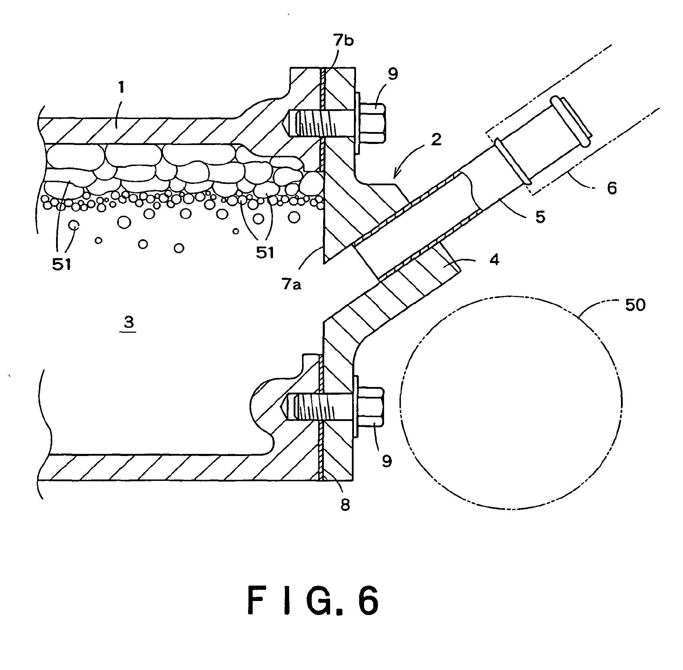

Another conventional connector flange 2 shown in Fig. 6 is provided with a boss 4 at a position slightly below the center thereof. The boss 4 is extended obliquely upward to prevent interference between a connecting tube 5 attached to the boss 4 and a device 50.

In some cases, a gas-liquid two-phase fluid of a liquid, such as cooling water or lubricating oil, and bubbles of a gas produced by the gasification of the liquid due to increase in the temperature of the liquid or bubbles resulting from inclusion of air in the liquid flows through the fluid passage 3. Bubbles 51 are liable to accumulate in an upper part of the fluid passage 3 of the structure when the gas-liquid two-phase fluid flows through the fluid passage 3.

Bubbles accumulated in the fluid passage 3 tend to flow into an external tube connected to the connecting tube 5 especially when the connecting tube 5 is connected to an upper part of the connector flange 2 as shown in Fig. 5. Those bubbles grow or disappear while the gas-liquid two-phase fluid flows through the tube, causing local pressure change in the gas-liquid two-phase fluid. Such local pressure change generates vibratory force that causes the tube to vibrate. Vibration of the tube generates noise and, when the worst comes to the worst, breaks the tube.

Suppose that the tube is included in a cooling system for cooling the engine and the body 1 of the fluid device is a heater core for heating the passenger compartment of an automobile. Then, the cooling water containing bubbles and flowing through the heater core and pipes connected to the heater core generates unpleasant noise and the passenger compartment echoes with the unpleasant noise.

Since the tube 5 is connected to a lower part of the connector flange 2 shown in Fig. 6, bubbles accumulated in the fluid passage 3 are unable to flow easily into an external tube. Thus, the connector flange 2 has some effect of separating the gas bubbles from the liquid. However, since the boss 4 is extended obliquely upward to avoid interference between the boss 4 and the device 50, a complicated, expensive casting mold is necessary to form the connector flange 2 by casting or a complicated, expensive forging die is necessary to form the connector flange 2 by forging. Since the axis of the connecting pipe 5 is inclined at an angle to the joining surface 7a, troublesome machining work is needed. Consequently, the connector flange 2 needs a high manufacturing cost.

Generic US 5,103,878 A discloses an apparatus for flushing and draining the coolant system of a vehicle. This apparatus consists of a flush cap having an integrally formed vertical sidewall with two tabs to permit the cap to be screwed onto a radiator inlet pipe, and a horizontal wall under which a gasket is located and pressed onto the top end of the radiator inlet pipe to form a watertight seal. An outlet tube can be secured to an outlet opening of the cap. The outlet opening extends downward below the sidewall so that a separate, second outlet tube leading into the radiator can be attached.

### SUMMARY OF THE INVENTION

Accordingly, it is an object of the present invention so solve the foregoing problems and to provide a flange structure capable of making a connecting tube connected thereto difficult to interfere with devices arranged thereabout, having an improved gas separating function and capable of being manufactured at a greatly reduced manufacturing cost.

A flange structure in a first aspect of the present invention includes: a main part having a flange, internally provided with a fluid passage and serving also as a body of a fluid device; a plate member attached to a joining surface of the flange of the main part so as to hold a gasket on the joining surface; and a connecting tube inserted through the plate member into the fluid passage and fixed to the plate member so as to extend obliquely upward toward the outside of the plate member.

In the flange structure according to the present invention, the connecting tube is inserted through an oblique opening formed in the plate member into the main part and is brazed to the plate member.

In the flange structure according to the present invention, the connecting tube has a slanting inner end inclined to the axis thereof and is fixed to the plate member with the slanting end facing the bottom of the main part.

Preferably, in the flange structure according to the present invention, the oblique opening is formed in a central part of the plate member.

Preferably, in the flange structure according to the present invention, the plate member has a uniform thickness.

Preferably, in the flange structure according to the present invention, a suction opening is formed in the inner end of the connecting tube extending in the fluid passage. The flange of the main part is provided with bosses provided with internally threaded holes in which bolts for fastening the plate member to the flange are screwed in, and the suction opening is situated near the bosses.

Preferably, in the flange structure according to the present invention, the connecting tube has an outer part projecting outside from the plate member, and a resin tube is connected to the outer part of the connecting tube.

Preferably, in the flange structure according to the present invention, the outer end of the connecting tube is pressed into the resin tube.

Preferably, in the flange structure according to the present invention, a fluid flows in a horizontal direction in the vicinity of the flange in the fluid passage.

Preferably, in the flange structure according to the present invention, a joining surface of the flange and a joining surface of the plate member are vertical.

Preferably, in the flange structure according to the present invention, the fluid device is a device for circulating a cooling medium used by an engine cooling system for cooling an automotive engine or a device for circulating a lubricating oil used by a lubricating system for an automobile. The fluid device is a heater core for using a cooling medium used by an engine cooling system for cooling an automotive engine for heating.

Preferably, in the flange structure according to the present invention, the fluid device is a device for circulating a cooling medium used by an engine cooling system for an industrial machine.

In the flange structure according to the present invention, a gas-liquid two-phase fluid flows through the fluid passage.

The connecting tube of the flange structure has difficulty in interfering with devices arrange thereabout, the flange structure is capable of separating a gas from a liquid and can be manufactured at a greatly reduced manufacturing cost.

### BRIEF DESCRIPTION OF THE DRAWINGS

The above and other objects, features and advantages of the present invention will become apparent from the following description taken in connection with the accompanying drawings, in which:
Fig. 1 is sectional view of a flange structure in a first embodiment according to the present invention;
Fig. 2 is a front elevation of the flange structure shown in Fig. 1;
Fig. 3 is a sectional view of a flange structure in a second embodiment according to the present invention;
Figs. 4A, 4B and 4C are sectional views of assistance in explaining the operation and effect of the flange structure in the second embodiment in comparison with those of the flange structure in the first embodiment;
Fig. 5 is a sectional view of a conventional flange structure; and
Fig. 6 is a sectional view of another conventional flange structure.

### DESCRIPTION OF THE PREFERRED EMBODIMENTS

### First Embodiment

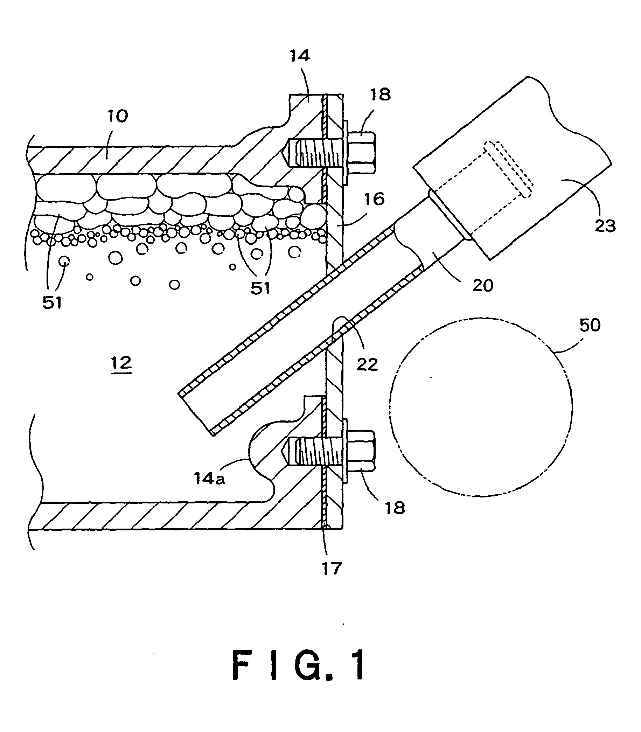

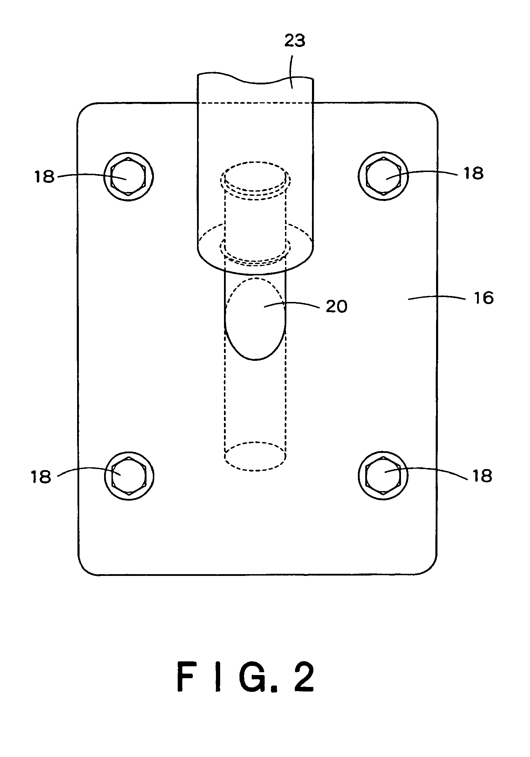

Fig. 1 shows a flange structure in a first embodiment according to the present invention combined with a main part 10 of a heater core, namely, a fluid device, for heating using cooling water for cooling an automotive engine. Fig. 2 is a front elevation of the flange structure shown in Fig. 1. The main part 10 of the heater core has a fluid passage 12 through which the cooling water flows. A flange 14 having a joining surface is formed at a free end of the main part 10. This flange structure includes a plate member 16. The plate member 16 is a flat member and has a uniform thickness, different from the conventional connector flange 2 shown in Fig. 5 provided with the boss 4. The plate member 16 is a metal plate formed in a shape corresponding to that of the flange 14 of the main part 10. A gasket 17 is held between the joining surface of the flange 14 and the plate member 16. The plate member 16 is fastened to the flange 14 with four bolts 18 as shown in Fig. 2.

A connecting tube 20 of a metal is attached to the plate member 16 by brazing. A resin tube 23 included in a cooling water circulating system is connected to the connecting tube 20. The plate member 16 is provided in a substantially central part thereof with an oblique through hole 22. The connecting tube 20 is inserted through the oblique through hole 22 into the main part 10 and is fixed by brazing to the plate member 20 so as to extend obliquely upward toward the outside. The inner end, namely, the suction end, of the connecting tube 20 is situated near bosses 14a protruding from the inner surface of the flange 14. Internal threads are formed in the bosses 14a, respectively. The bolts 18 are screwed in the internally threaded holes of the bosses 14, respectively. An outer part of the connecting tube 20 extending outside the main part 10 is pressed into the tube 23 included in the cooling water circulating system.

Referring to Fig. 1, bubbles are formed in the cooling water due to increase in the temperature of the cooling water heated by heat generated by the engine and resulting from inclusion of external gas, such as air, in the cooling water as the cooling water is circulated continuously. Consequently, a gas-liquid two-phase fluid flows in the fluid passage 12. Then, bubbles 51 are accumulated in an upper space of the fluid passage 12 in the main part 10 of the heater core. Since the bubbles 51 tend to rise in the cooling water, a lower part of the fluid passage 12 has a lower bubble density.

In the conventional connector flange 2 shown in Fig. 5, the boss 4 is formed in an upper part of the connector flange 2 and the connecting tube 5 is disposed at an elevated level. Therefore, bubbles 51 accumulated in the fluid passage 12 are easily sucked into the connecting tube 20. In the flange structure in the first embodiment, the connecting tube 20 is fixed to the plate member 16 so as to extend obliquely upward toward the outside so that the inner end of the connecting tube 20 is at a lower position in the fluid passage 12. Therefore, the bubbles 51 accumulated in the fluid passage 12 can hardly be sucked into the connecting tube 20.

Since the connecting tube 20 is extended obliquely upward toward the outside, the connecting tube 20 will not interfere with a device 50 disposed near the main part 10. Thus the flange structure in the first embodiment has a function to prevent interference between the connecting tube 20 and the device 50 and a function to separate the bubbles 51 from the cooling water that flows into the connecting tube 20.

Since the flange structure employs the plate member 16 that can be easily made by a simple blanking process instead of the connector flange formed by a casting or forging process, the flange structure can be manufactured at a very low manufacturing cost.

Since the oblique opening 22 is formed in the central part of the plate member 16, the connecting tube 20 can be stably brazed to the plate member 20. Since the plate member 16 has a uniform thickness, the plate member 16 can be formed easily.

### Second Embodiment

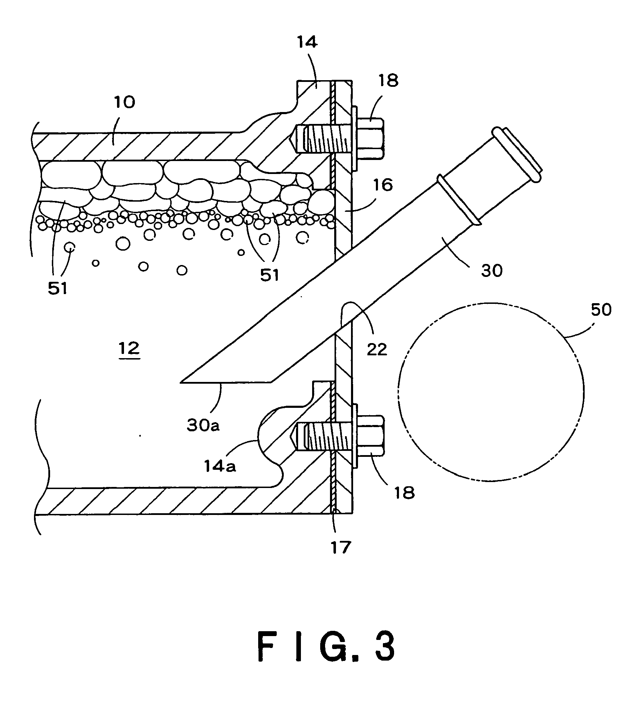

A flange structure in a second embodiment according to the present invention will be described with reference to Fig. 3. The flange structure in the second embodiment is similar the flange structure in the first embodiment and hence parts of the second embodiment like or corresponding to those of the first embodiment are denoted by the same reference characters and the description thereof will be omitted.

The flange structure in the second embodiment differs from the flange structure in the first embodiment only in the shape of the inner end of a connecting tube 30 included therein.

Referring to Fig. 3, the connecting tube 30 has a slanting inner end 30a contained in a plane inclined to the axis of the connecting tube 30. The slanting inner end 30a improves a function to separate gas from liquid. The connecting tube 30 is inserted through an oblique opening 22 formed in a plate member 16 into a main part 10. The connecting tube 30 is fixed by brazing to the plate member 16 such that the slanting inner end 30a faces the bottom of the main part 10.

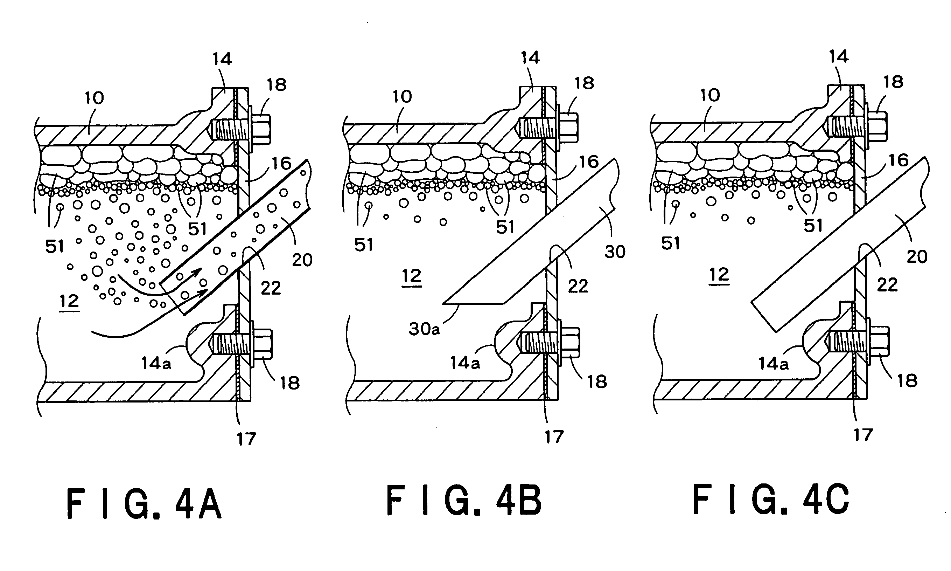

The function and effect of the flange structure in the second embodiment will be described in comparison with those of the flange structure in the first embodiment with reference to Figs. 4A, 4B and 4C. Figs. 4A and 4C show the connecting tube 20 of the first embodiment and Fig. 4B shows the connecting tube 30 of the second embodiment.

When the connecting tube 20 is extended deep into the main part 10, it is possible that the inner end of the connecting tube 20 extends over the boss 14a and interferes with the boss 14a if the boss 14a is so formed as to protrude into the extension of the connecting tube 20. Interference between the connecting tube 20 and the boss 14 can be avoided by situating the inner end of the connecting tube at an elevated level as shown in Fig. 4A. However, the bubbles 51 are able to flow into the connecting pipe 20 more easily when the inner end of the connecting tube 20 is situated at an elevated level as shown in Fig. 4A than when the inner end of the connecting tube 20 is situated at a low level as shown in Fig. 4C.

Since the slanting inner end of the connecting tube 30 of the second embodiment faces the bottom of the main part 10, the connecting tube 30 will not interfere with the boss 14a. Since the slanting inner end of the connecting tube 30 opens into the fluid passage 12 at a low level as compared with the inner end of the connecting tube 20, contained in a plane perpendicular to the axis of the connecting tube 20 as shown in Fig. 4B. Consequently, the cooling water that flows into the connecting tube 30 has a lower bubble density. Thus the flange structure in the second embodiment has an improved function to separate gas from liquid.

Although the invention has been described in its preferred embodiments with a certain degree of particularity, obviously many changes and variations age possible therein. It is therefore to be understood that the present invention may be practiced otherwise than as specifically described herein without departing from the scope of the claims.

## Claims

1. A flange structure of a fluid device comprising:
a main part (10) having a flange (14), internally provided with a fluid passage (12) and serving also as a body of the fluid device;
**characterized by**
a plate member (16) attached to a joining surface of the flange (14) of the main part so as to hold a gasket (17) on the joining surface; and
a connecting tube (20) inserted through the plate member (16) into the fluid passage (12) and fixed to the plate (16) member so as to extend obliquely upward toward the outside of the plate member (16), and the inner end of the connecting tube (20) being at a lower position in the fluid passage (12), such that bubbles (51) accumulated in the fluid passage (12) can hardly be sucked into the connecting tube (20).

2. The flange structure according to claim 1, wherein the connecting tube (20) is inserted through an oblique opening (22) formed in the plate member into the main part and is brazed to the plate member.

3. The flange structure according to claim 1, wherein the connecting tube (30) has a slanting inner end (30a) inclined to an axis thereof and is fixed to the plate member (16) with the slanting inner end facing the bottom of the main part (10).

4. The flange structure according to claim 2, wherein the oblique opening (22) is formed in a central part of the plate member.

5. The flange structure according to claim 1, wherein the plate member (16) has a uniform thickness.

6. The flange structure according to claim 1, wherein a suction opening is formed in the inner end of the connecting tube (20) extending in the fluid passage.

7. The flange structure according to claim 6, wherein the flange (14) of the main part (10) is provided with bosses (14a) provided with internally threaded holes in which bolts (18) for fastening the plate member (16) to the flange (14) are screwed in, and the suction opening is situated near the bosses (14a).

8. The flange structure according to claim 1, wherein the connecting tube (20) has an outer part projecting outside from the plate member, and a resin tube (23) is connected to the outer part of the connecting tube.

9. The flange structure according to claim 8, wherein the outer end of the connecting tube (20) is pressed into the resin tube (23).

10. The flange structure according to claim 1, wherein a fluid flows in a horizontal direction in the vicinity of the flange (14) in the fluid passage (12).

11. The flange structure according to claim 1, wherein a joining surface of the flange (14) and a joining surface of the plate member (16) are vertical.

12. The flange structure according to claim 1, wherein the fluid device is a device for circulating a cooling medium used by an engine cooling system for cooling an automotive engine or a device for circulating a lubricating oil used by a lubricating system for an automobile.

13. The flange structure according to claim 12, wherein the fluid device is a heater core for using a cooling medium used by an engine cooling system for cooling an automotive engine for heating.

14. The flange structure according to claim 1, wherein the fluid device is a device for circulating a cooling medium used by an engine cooling system for an industrial machine.

15. The flange structure according to claim 1, wherein a gas-liquid two-phase fluid flows through the fluid passage.

## Patentansprüche

1. Flanschstruktur einer Fluidvorrichtung, die umfasst:
einen Hauptteil (10), der einen Flansch (14) aufweist und im Inneren mit einem Fluiddurchlass (12) ausgestattet ist und auch als Gehäuse für die Fluidvorrichtung dient;
**gekennzeichnet durch**
ein Plattenelement (16), das an eine Verbindungsoberfläche des Flansches (14) des Hauptteils so angebracht ist, dass es eine Dichtung (17) auf der Verbindungsoberfläche hält; und
ein Verbindungsrohr (20), das **durch** das Plattenelement (16) in den Fluiddurchlass (12) eingebracht ist und an das Plattenelement (16) so befestigt ist, dass es sich vom Plattenelement (16) nach außen hin schräg nach oben erstreckt, und das innere Ende des Verbindungsrohres (20) sich in einer unteren Position des Fluiddurchlasses (12) derart befindet, dass Blasen (51), die sich im Fluiddurchlass (12) ansammeln, kaum in das Verbindungsrohr (20) eingesaugt werden können.

2. Flanschstruktur nach Anspruch 1, bei der das Verbindungsrohr (20) durch eine schräge Öffnung (22) eingebracht ist, welche in dem Plattenelement in das Hauptteil ausgeformt ist, und mit dem Plattenelement verlötet ist.

3. Flanschstruktur nach Anspruch 1, bei der das Verbindungsrohr (30) ein schiefes inneres Ende (30a) aufweist, das bezüglich einer Achse davon geneigt angeordnet ist und das an das Plattenelement (16) so angebracht ist, dass das schiefe innere Ende (30a) dem Boden des Hauptteils zugewandt ist.

4. Flanschstruktur nach Anspruch 2, bei der die schräge Öffnung (22) in einem mittleren Bereich des Plattenelements ausgebildet ist.

5. Flanschstruktur nach Anspruch 1, bei der das Plattenelement (16) eine einheitliche Dicke aufweist.

6. Flanschstruktur nach Anspruch 1, bei der eine Saugöffnung im inneren Ende des sich in den Fluiddurchlass erstreckenden Verbindungsrohres (20) ausgebildet ist.

7. Flanschstruktur nach Anspruch 6, bei der der Flansch (14) des Hauptteils (10) Buckel (14a) mit Löchern mit Innengewinde aufweist, in die Bolzen (18), zum Befestigen des Plattenelements (16) an den Flansch (14),eingeschraubt werden, und die Saugöffnung nahe an den Buckeln (14a) untergebracht ist.

8. Flanschstruktur nach Anspruch 1, bei der das Verbindungsrohr (20) einen äußeren Teil aufweist, der aus dem Plattenelement nach außen hervorragt, und ein Harzrohr (23) mit dem äußeren Teil des Verbindungsrohres verbunden ist.

9. Flanschstruktur nach Anspruch 8, bei der das äußere Ende des Verbindungsrohres (20) in das Harzrohr gepresst ist.

10. Flanschstruktur nach Anspruch 1, bei der ein Fluid in der Umgebung des Flansches (14) in dem Fluiddurchlass (12) in einer horizontalen Richtung fließt.

11. Flanschstruktur nach Anspruch 1, bei der eine Verbindungsoberfläche des Flansches (14) und eine Verbindungsoberfläche des Plattenelements (16) vertikal sind.

12. Flanschstruktur nach Anspruch 1, bei der die Fluidvorrichtung eine Vorrichtung zum Zirkulieren eines Kühlmittels ist, das in einem Antriebskühlsystem zum Kühlen eines Fahrzeugantriebs verwendet wird, oder eine Vorrichtung zum Zirkulieren von Schmieröl ist, das in einem Schmiersystem für Kraftwagen verwendet wird.

13. Flanschstruktur nach Anspruch 12, bei der die Fluidvorrichtung ein Heizkern ist, um ein Kühlmittel, das in einem Antriebskühlsystem zum Kühlen eines Fahrzeugantriebs verwendet wird, zum Heizen zu verwenden.

14. Flanschstruktur nach Anspruch 1, bei der die Fluidvorrichtung eine Vorrichtung zum Zirkulieren eines Kühlmittels ist, das in einem Antriebskühlsystem für eine Industriemaschine verwendet wird.

15. Flanschstruktur nach Anspruch 1, bei der ein zweiphasiges Gas-Flüssigkeitsfluid durch den Fluiddurchlass fließt.

## Revendications

1. Structure de rebord d'un dispositif de fluide, comprenant :
une partie principale (10) ayant un rebord (14), dans laquelle est prévue un passage de fluide (12) et servant également de corps du dispositif de fluide;
**caractérisée en ce qu'**elle comprend :
un élément de plaque (16) fixé sur une surface d'assemblage du rebord (14) de la partie principale afin de maintenir un joint (17) sur la surface d'assemblage ; et
un tube de raccordement (20) inséré à travers l'élément de plaque (16) dans le passage de fluide (12) et fixé sur l'élément de plaque (16) afin de s'étendre obliquement vers le haut vers l'extérieur de l'élément de plaque (16), et l'extrémité interne du tube de raccordement (20) étant à une position inférieure dans le passage de fluide (12) de sorte que des bulles (51) accumulées dans le passage de fluide (12) ne risquent pas d'être aspirées dans le tube de raccordement (20).

2. Structure de rebord selon la revendication 1, dans laquelle le tube de raccordement (20) est inséré à travers une ouverture oblique (22) formée dans l'élément de plaque dont la partie principale est ébrasée sur l'élément de plaque.

3. Structure de rebord selon la revendication 1, dans laquelle le tube de raccordement (30) a une extrémité interne inclinée (30a), inclinée vers son axe et fixé sur l'élément de plaque (16) avec une extrémité interne inclinée orientée vers la partie inférieure de la partie principale (10).

4. Structure de rebord selon la revendication 2, dans laquelle l'ouverture oblique (22) est formée dans une partie centrale de l'élément de plaque.

5. Structure de rebord selon la revendication 1, dans laquelle l'élément de plaque (16) a une épaisseur uniforme.

6. Structure de rebord selon la revendication 1, dans laquelle une ouverture d'aspiration est formée dans l'extrémité interne du tube de raccordement (20) s'étendant dans le passage de fluide.

7. Structure de rebord selon la revendication 6, dans laquelle le rebord (14) de la partie principale (10) est doté de bosses (14a) prévues avec des trous filetés à l'intérieur, dans lesquels sont vissés des boulons (18) pour la fixation de l'élément de plaque (16), sur le rebord (14) et l'ouverture d'aspiration est située à proximité des bosses (14a).

8. Structure de rebord selon la revendication 1, dans laquelle le tube de raccordement (20) a une partie externe faisant saillie à l'extérieur de l'élément de plaque, et un tube en résine (23) est raccordé à la partie externe du tube de raccordement.

9. Structure de rebord selon la revendication 8, dans laquelle l'extrémité externe du tube de raccordement (20) est comprimée dans le tube en résine (23).

10. Structure de rebord selon la revendication 1, dans laquelle un fluide s'écoule selon une direction horizontale à proximité du rebord (14) dans le passage de fluide (12).

11. Structure de rebord selon la revendication 1, dans laquelle une surface d'assemblage du rebord (14) et une surface d'assemblage de l'élément de plaque (16) sont verticales.

12. Structure de rebord selon la revendication 1, dans laquelle le dispositif de fluide est un dispositif pour faire circuler un moyen de refroidissement utilisé par un système de refroidissement de moteur pour refroidir un moteur d'automobile ou un dispositif pour faire circuler une huile de lubrification utilisée par un système de lubrification pour une automobile.

13. Structure de rebord selon la revendication 12, dans laquelle le dispositif de fluide est un radiateur de chauffage qui utilise un moyen de refroidissement de moteur pour refroidir un moteur d'automobile pour le chauffage.

14. Structure de rebord selon la revendication 1, dans laquelle le dispositif de fluide est un dispositif pour faire circuler un milieu de refroidissement utilisé par un système de refroidissent de moteur pour une machine industrielle.

15. Structure de rebord selon la revendication 1, dans laquelle un fluide à deux phases gazeuse-liquide s'écoule à travers le passage de fluide.
